# EUROPEAN PATENT APPLICATION

(11) **EP 1 054 195 A1**
(43) Date of publication of application: **22.11.2000**
(21) Application number: 00302931.1
(22) Date of filing: 07.04.2000
(51) Int. Cl.: F16J 13/08, F16L 55/136

(54) **Pipeline closure**

(30) Priority: 10.04.1999 GB 9908123
(71) Applicant: Pipeline Engineering Limited, Richmond, North Yorkshire DL10 7JG (GB)
(72) Inventor: Wilson, Kevin, Cleveland, TS6 0ST (GB); Bulman, Frank, County Durham, DL1 4NS (GB)
(74) Representative: Gordon, Naoise Padhraic Edward

(57) **Abstract**

A closure suitable for use on pipelines and pressure vessels, which can resist high pressure but which can be opened quickly when the pipeline or pressure vessel pressure retained by the closure has been reduced to zero. The closure comprises a door (3) adapted to fit into an aperture in a hub (1), a plurality of arcuate locking members or segment blocks (35) disposed around the periphery of the door which engage with a recess (23) in the hub (1) to lock the door. The segment blocks (35) are movable in a radial direction towards and away from the periphery of the door, and the closure further comprising a drive plate (101) having a plurality of drive slots (109) adapted to engage the guide pins (108) on the blocks (35) such that rotation of the drive plate (101) causes movement of the segment blocks (35) in a radial direction between an open position and a locked position. A lockout plate (102) is fixed to the drive plate (101) so that rotation of the drive plate (101) also causes the lockout plate (102) to engage the segment blocks (35) and prevent them moving radially inwards. Thus a single action (rotation of the drive plate) cause the closure to lock and a lockout plate to provide additional locking security.

## Description

This invention relates to a closure suitable for use on pipelines and pressure vessels, and particularly to a closure which can resist high pressure but which can be opened quickly when the pipeline or pressure vessel pressure retained by the closure has been reduced to zero.

Various types of pipeline and pressure vessel closure are known. One known type is the screw threaded cap closure, a two-piece design comprising a threaded hub and cap. It suffers from the disadvantage that it is slow to open and close and the threads can be difficult to align. The screw threads cannot be inspected when the closure is in the closed position.

A further known closure is the clamp yoke closure. This is a three-piece design comprising a hub, door and retaining clamp yokes, and uses a pressure energised o-ring type seal. This type of closure is slow to open and close if fine threaded screws are used, and requires a high level of maintenance. The hinge arms are prone to sag.

Another known arrangement of closure is the band-locking closure. This is a two-piece design of hub and door, the door being retained by a thin stainless steel conical band. A vent/bleeder screw and locking band segment prevent release of the band until pressure has been vented. This closure suffers from the disadvantage that the band is not well retained when the door is in the open position, with the result that the band can slip and distort on smaller lighter sizes if operated wrongly. The locking band segment can be difficult to insert and remove.

Another known closure is the bayonet locking closure, a two-piece design of hub and door, each with bayonet type teeth, with the door being deeply set into the hub. The door must be turned to engage the door bayonet teeth behind those in the hub. This closure suffers from the disadvantage that the hub and door are heavy and the door is very deeply set in the hub, moreover the door requires to be turned twice, which is difficult on heavy large doors. This has the result that the closure is relatively slow to open and close.

It is an object of the present invention to provide an improved closure which is quick and easy to open but which has a mechanism which prevents opening of the closure under pressure.

According to a first aspect of the present invention there is provided a closure comprising a door adapted to fit into an aperture in a member to be closed, a plurality of arcuate locking members disposed around the periphery of the door for locking the door to the said member, the locking members being movable in a radial direction towards and away from the periphery of the door, the closure further comprising a locking plate member adapted to be moved to a locking position radially inward of the arcuate lacking members when the arcuate locking members are at the expanded position, and drive means adapted to drive the arcuate locking members in the radial direction and to drive the locking plate member into the locking position.

In a first embodiment the drive means includes guide means to guide the locking plate in a direction perpendicular to the plane of the door. Preferably the guide means comprises one or more guide rails projecting in a perpendicular direction from the door, whereby the locking ring is mounted on the guide rail means such that the locking ring may move in a direction perpendicular to the door.

Preferably the closure further comprises a hinge assembly. Preferably the guide means are provided on one or more door arms which connect the door to the hinge assembly.

Preferably the aperture comprises a substantially cylindrical bore. Preferably the cylindrical bore has a locking recess. Preferably the recess has a planar bearing surface adapted to seal against a corresponding bearing surface on the door. Preferably the recess has an angled wedge surface opposed to the bearing surface.

Preferably the locking members are provided with a corresponding angled surface adapted to engage the angled wedge surface.

Preferably the closure further comprises an externally threaded vent plug and the door is provided with an internally threaded through aperture adapted to receive the vent plug. Preferably the vent plug is adapted to engage the locking plate member in such a manner as to permit relative rotation of the vent plug and locking plate member.

According to a second aspect of the present invention there is provided a closure comprising a door adapted to fit into an aperture in a member to be closed, a plurality of arcuate locking members disposed around the periphery of the door for locking the door to the said member, the locking members being movable in a radial direction towards and away from the periphery of the door, the closure further comprising a drive plate having a plurality of drive slots adapted to engage the arcuate locking members such that rotation of the drive plate causes movement of the locking members in a radial direction between an open position and a locked position.

Preferably each drive slot has a first arcuate portion whose spacing from the axis of rotation is substantially constant, and a second offset portion whose spacing from the axis of rotation decreases with distance from the first portion.

Preferably each arcuate locking member has two engaging pins each adapted to engage a drive slot.

Preferably the closure comprises a locking plate adapted to engage and prevent radial movement of the arcuate members when they are in the locked position.

Preferably the locking plate is integral with the drive plate. Preferably the locking plate comprises a plurality of retaining lugs adapted to engage the arcuate locking members in the locked position. Preferably each arcuate locking member is provided with one or more recesses such that the rotational position of the retaining lugs corresponds to the rotational position of the recesses when the arcuate locking members are in the open position. In this position the lugs extend into the area of the recesses and do not engage the arcuate locking members.

The closure may be provided with additional locking means comprising an externally threaded vent plug. Preferably the door is provided with an internally threaded through aperture adapted to receive the vent plug. Preferably the vent plug is secured to the locking ring in such a manner as to permit relative rotation of the vent plug and locking ring.

Preferably the vent plug comprises safety means to prevent unscrewing of the threads of the vent plug when the closure is subject to differential pressure.

Preferably the safety means comprises an end cap at the upper end of the vent plug, a piston member connected to the end cap and extending down through a cylindrical bore portion in the vent plug body, sealing means between the piston member and the bore portion, and resilient spring means adapted to bias the end cap towards the plug body. Preferably the piston is adapted to move up against the biasing force to an upper position when subject to internal pressure below the vent plug. Preferably the piston is adapted to move down under the biasing force to a lower position when the internal pressure is removed.

Preferably the end cap comprises engagement means adapted to permit rotation of the end cap by an engaging tool. Preferably the end cap includes location means adapted to locate with the plug body when the piston is in the lower position and adapted to allow relative rotation of the end cap and plug body when the piston is in the upper position.

An embodiment of the invention will now be described, by way of example only, with reference to the accompanying figures, where:
Fig. 1 is an elevation on a closure according to a first embodiment of the invention;
Fig. 2 is a sectional view on A-A through the closure of Fig. 1;
Fig. 3 is a sectional view on A-A of the hub of the closure of Fig. 1;
Fig. 4 is an elevation on the closure of Fig. 1 with the locking ring and part of the hinge assembly omitted for clarity;
Fig. 5 is a longitudinal sectional view on B-B through the vent plug assembly of the closure of Fig. 2;
Fig. 6 is an end view on line C-C of the cap of the vent plug assembly of Fig. 5;
Fig. 7 is an elevation of the piston rod of the vent plug assembly of Fig. 5; and
Fig. 8 is a partial elevation of the locking ring of the closure of Fig. 1;
Fig. 9 is an elevation on a closure according to a second embodiment of the invention;
Fig. 10 is a sectional view on D-D through the closure of Fig. 9;
Fig. 11 is an elevation on the closure of Fig. 9 with the drive plate cut through in the closed position;
Fig. 12 is an elevation on the closure of Fig. 9 with the drive plate cut through in the open position;
Fig. 13 is an elevation on the locking segments only of the closure of Fig. 9;
Fig. 14 is an elevation on the segment guide plate only of the closure of Fig. 9;
Fig. 15 is an elevation on the lockout plate only of the closure of Fig. 9;
Fig. 16 is an elevation on the locking segments and lockout plate only of the closure of Fig. 9 in the closed position;
Fig. 17 is an elevation on the locking segments and segment guide plate only of the closure of Fig. 9 in the closed position;
Fig. 18 is a section through the vent bleed screw of the closure of Fig. 9 in the locked position; and
Fig. 19 is a section through the vent bleed screw of the closure of Fig. 9 in the unlocked position.

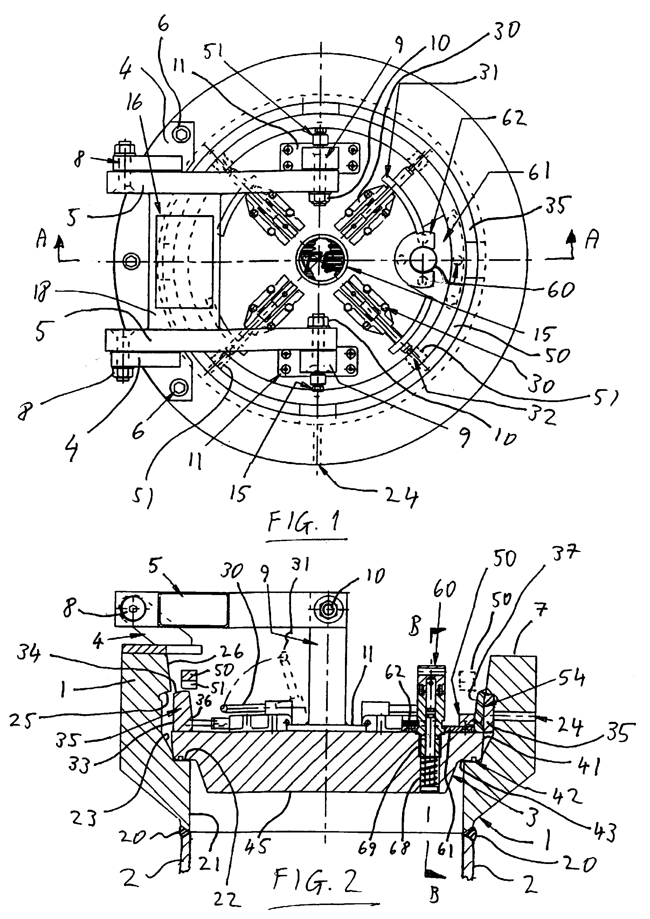

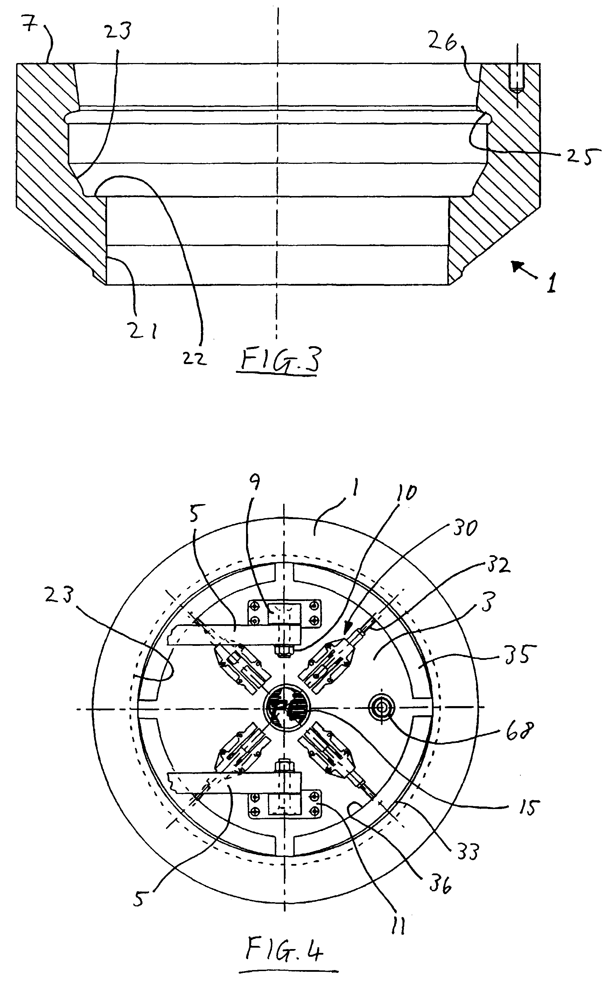

Referring to Figs. 1 to 4 there is shown a hub 1 which is adapted to be welded within the opening of a pipeline or pressure vessel 2. A circular door 3 is mounted on two hinge brackets 4 by two hinge arms 5 and two door arms 9. The hinge brackets 4 are secured by bolts 6 to the front face 7 of the hub 1. Each hinge arm 5 is pivotally connected to the respective hinge bracket 4 by a hinge bolt 8. Each door arm 9 is pivotally connected at one end to the respective hinge arm 5 by a hinge bolt 10 and is rigidly connected at the other end to the front face of the door 3 by a bolted end plate 11. The two pivot connections on the hinge arm 5 allow the door 3 to be moved into and out of the closed position substantially in an axial direction perpendicular to the plane of the door 3. Two nameplates 15, 16 are shown secured to the door 3 and to a tubular member 18 spanning between the hinge arms 5 respectively. These nameplates may carry operating instructions, but are optional and do not form part of the invention.

The hub 1 is substantially in the shape of a hollow circular cylinder. The outer surface of the cylinder tapers towards the rear face, where a bevelled edge permits the formation of a butt weld 20 with the adjacent pipe 2. The inner surface of the cylinder has a first portion 21 adjacent to the rear face which has a diameter equal to that of the adjacent pipe 2. Next to the first portion 21 is a step portion 22 forming a perpendicular sealing surface which is adapted to engage with a sealing surface on the door 3. Adjacent to the step portion 22 is a tapered recess portion 23 adapted to guide the door to a central position as the door is closed. Four radially extending release holes 24 which pass from the inner surface to the outer surface of the hub are spaced equidistantly around the perimeter of the tapered recess portion 23, to permit the release of the segment blocks or arcuate locking members 35, described later.

At the front end of the tapered recessed portion 23 is an angled return shoulder 25, which is adapted to fit against a corresponding angled surface on the segment blocks 30, described later. A further tapered portion 26 of the inner surface extends from the shoulder 25 to the front face 7 of the hub 1. The tapered portion 26 assists in guiding the door to a central position as the door is closed.

Arranged on the front face of the door 3 are four equally spaced pull/push clamps or toggle clamps 30 which are operable by insertion and operation of a lever handle (not shown) or by operation of an integral tee bar handle 31. The shaft 32 of each clamp 30 is connected to a segment block 35, which is a solid, arcuate, steel locking member having a substantially rectangular cross-section and subtending an angle of between 70° and 85°. In practice an angle of about 76° has been found to be suitable. The radius of curvature of the segment block 35 is such that the outer face 33 of the segment block has the same curvature as the inner surface of the hub 1 at the tapered recess portion 23. When the shaft 32 of the clamp 30 is in its retracted position, the segment block 35 sits on the front face 40 of the door 3 and does not project beyond the outer perimeter 41 of the door. When the shaft 32 of the clamp 30 is in its extended position, the segment block 35 is moved radially outwards to a locking position in which it partially overhangs the outer perimeter 41 of the door. When the door 3 is closed, such that the seal 42 in the rear bearing surface 43 of the door bears against the step portion 22 of the hub 1, the segment block 35 in its locking position locates within the recess 23. As the segment block 35 is moved radially outwards the tapered front surface 34 of the segment block 35 locates against the tapered surface 25 of the hub. The segment block becomes elastically deformed under the wedge action of the corresponding tapered surfaces 25 and 34, and the effect is to push the door 3 tighter against the step portion 22 of the hub 1.

When the door 3 is closed and all four segment blocks 35 have been pushed radially outward to force the door tightly against the hub, a locking ring 50 can be slid into place, to prevent the segment blocks 35 from retracting radially inwards. The locking ring 50 is a continuous steel ring of rectangular cross section with four cut-out portions 51 on its rear face to allow it to fit over the shafts 32 of the clamps 30. The outer diameter of the locking ring 50 is such that the ring just fits inside the inner surfaces 36 of the segment blocks 35. A front portion 37 of the inner surface 36 of each segment block 35 is tapered, to aid alignment of the locking ring 50 as it is moved towards the front surface 40 of the door 3. When the locking ring 50 is pushed into place so that it bears against the front face 40 of the door, the segment blocks 35 cannot be displaced radially and the closure is thus locked.

When the segment blocks 35 are pushed radially outwards into the locked position, there is a gap between adjacent segments. In order to prevent detritus collecting in this gap and damaging future operation of the seal or preventing opening of the closure, the locking ring 50 may be provided with four polyurethane seals 54, shaped to fit between the adjacent segment blocks 35. The left hand side of Fig. 1 shows the segment block 35 in the open position with the locking ring 50 above the segment block, while the right hand side shows the segment block 35 in the closed position, with the locking ring 50 behind the segment block. A PU seal 54 can be seen in section on the right hand side of Fig. 1, while part of the end face of the adjacent segment block 35 can be seen behind the seal 54. The four PU seals 54 are secured by bolts at equally spaced locations around the ring 50.

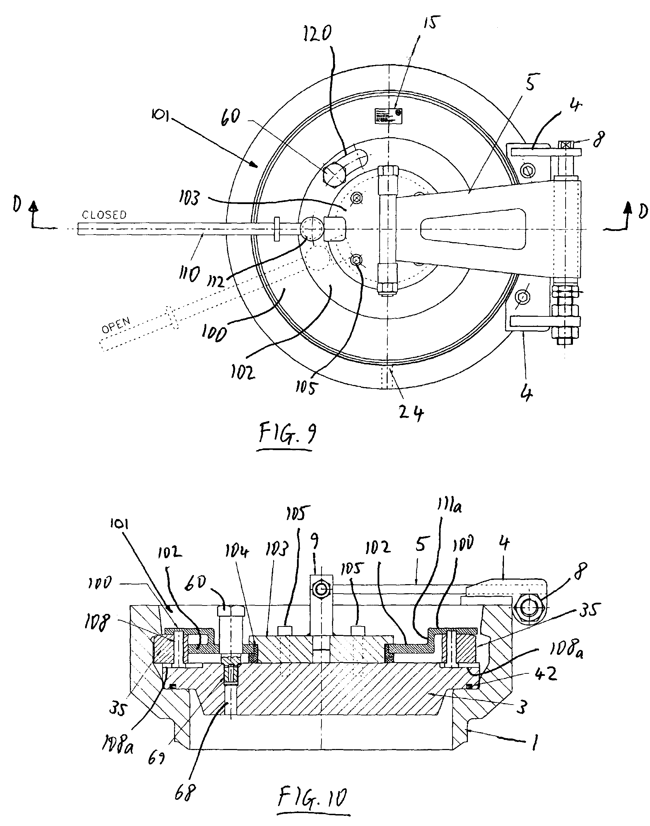

Movement of the locking ring 50 is effected by sliding it along the two door arms 9, as can be seen more clearly in Fig. 8. The locking ring has two ball transfer units 53, for example ALWAYSE HEVI-LOAD ball transfer units, attached to the locking ring 50 at diametrically opposed locations. The door arms 9 have grooves 52 which extend longitudinally along the arms. Each ball transfer unit locates within a groove 52 and the locking ring can then be slid forwards away from the door face 40 along the door arms 9. The hinge arms 5 act as a stop and prevent the locking ring 50 coming off the door arms 9.

The closure of the present invention can incorporate a vent plug 60 which prevents the door 3 being opened while there is a large pressure difference across the closure. The vent plug 60 is secured to the locking ring 50 by a location plate 61 which is screwed to the locking ring 50 and a vent plug collar 62. The collar 62 engages in a recess 63 in the vent plug 60 and serves to prevent relative longitudinal movement of the vent plug and locking ring, while allowing relative rotation of the vent plug and locking ring.

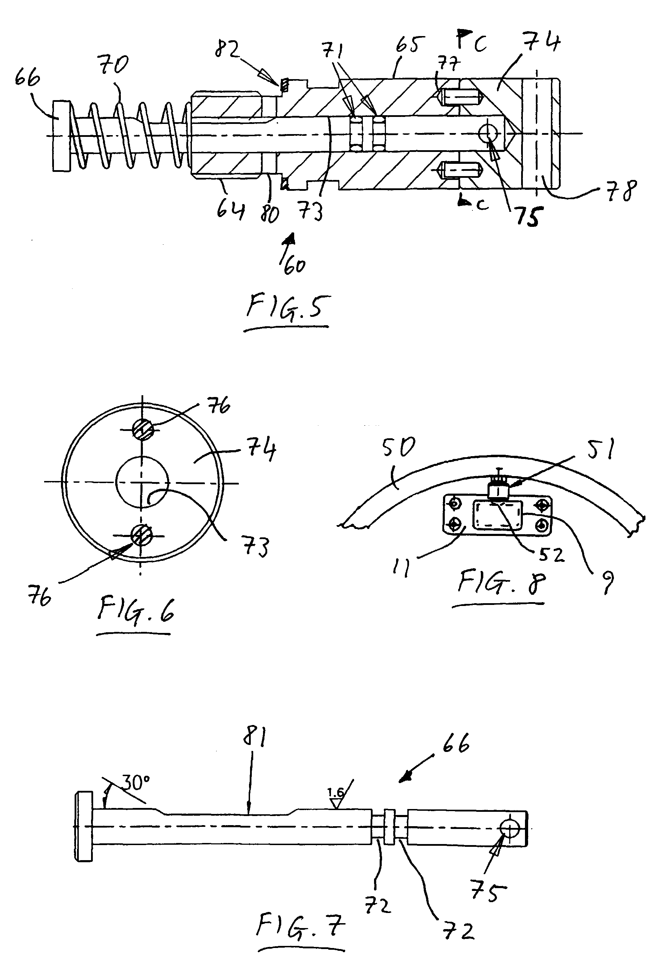

The vent plug can be seen in more detail in Figs. 5 to 7. The vent plug 60 comprises a plug body 65 and a piston rod 66 which can slide within a cylindrical bore 73 formed within the plug body. A portion 64 of the shank of the plug body is provided with an external thread, adapted to fit an internal thread 69 provided in an aperture 68 which extends through the door 3. As the locking ring is slid along the guide rails 52 towards the door, the vent plug 60 enters the aperture 68. The locking ring can only be brought into contact with the door when the vent plug is rotated so as to engage the threads 64 and 69. Further rotation of the vent plug 60 causes the vent plug to be screwed fully home to produce a pressure tight connection by means of the bonded seal 82 bearing on the door 3, and the locking ring 50 to engage with the segment blocks 35 so as to lock the closure.

When the pressure vessel or pipeline is under pressure, so that there is a greater pressure on the rear face 45 of the door 3 than on the front face 40, the piston rod 66 is forced by the differential pressure in the direction of Arrow A in Fig. 5 against the reaction force of the spring 70. Two 'O' ring seals 71 are provided to seal between the piston shaft 72 and the internal bore 73 of the plug body 65. At the far end of the piston rod 66 a spring pin 75 links the piston rod to an end cap 74, which moves with the piston rod 66. When the piston is driven in the direction of Arrow A the end cap 74 separates from the plug body 65, and the two location pins 76 fixed to the end cap 74 disengage from the location holes 77 provided in the end of the plug body. When the location pins 76 are disengaged, the end cap can be rotated freely relative to the plug body 65, so that the vent plug cannot be removed by turning the end cap 74 when the pressure difference is sufficient to disengage the location pins 76. When the pressure difference is reduced, the piston rod 66 and end cap 74 will move in a direction opposite to Arrow A, and, on turning the end cap 74, the location pins 76 will engage with location holes 77, so that anti-clockwise turning of the end cap, for example by inserting a lever arm through the hole 78 and turning the lever arm, will unscrew the plug body from the aperture 68 and lift the locking ring 50 away from the door 3. Although in the illustrated embodiment the end cap is shown with a through hole 78, it is to be understood that other engagement means may be used, for example the end cap 74 may have a hexagonal head for engagement by a wrench socket.

The vent plug 60 is provided with vent holes 80 in the plug body 65 and a waisted shank 81 in the piston rod 66, to allow venting of any slight pressure when the vent plug is removed.

The closure of the present invention has several advantages described below.

The closure door 3 is secured in place by independently operated segment blocks 35. If there is any residual pressure behind the closure door the force exerted on the door and hence on the segments 35 makes it difficult to disengage the segments, thus acting as a safety warning of possible trapped pressure or other problems.

In the closed position a secondary inner ring 50, secured in place by the vent/bleeder screw 60, ensures that no locking segment 35 can be withdrawn until the vent/bleeder screw 60 has been removed and hence the vessel vented of all pressure.

The vent/bleeder screw 60 has a pressure warning means. Under internal pressure the vent/bleeder screw head or end cap 74 pushes out and un-couples from the main screw body 65. Due to pressure preventing the head from being pushed back into place, the vent/bleeder screw cannot be removed. Only after the vessel has been drained and vented can the screw head or end cap 74 be engaged to allow the vent/bleeder to be removed. If excess force is required to engage the screw thread it may indicate pressure is still trapped in the vessel, and so attempts to open the closure can cease until a full investigation is carried out.

The unlocking and opening of the closure door takes place in the following fashion.
1. Ensure that the vessel isolation valve (not shown) has been fully closed.
2. Ensure that the vessel 2 has been fully drained and vented and isolated from any other pressure source.
3. Push in the vent/bleeder screw head 74, engage the locating dowel pins 76, turn and loosen the vent/bleeder screw by a 1/4 turn but do not remove. This allows venting of any slight excess pressure through vent holes 80.
4. When sure the closure is safe to open, remove the vent/bleeder screw 60. The screw is secured to the inner locking ring 50, and once the screw is removed this ring can be pulled forward leaving the locking segments 35 free to be disengaged.
5. Using the push-pull clamps 30 attached to each segment 35, withdraw each segment in turn from the hub recess 1.
6. The door 3 can now pulled out from the hub 1 and swung open.

If the closure has been locked closed for a long period, corrosion may have taken place, making it difficult to operate the clamps 30 to move the segment blocks 35 radially inwards. If necessary the bond between the segment block 35 and the hub 1 can be broken by inserting a bar into the release hole 24 from the outside and applying an impact by hammer or similar. The inner end of the bar will bear against the segment block and act to break the bond between the segment block 35 and the hub 1.

Locking and closing of the door of the closure of the invention is accompanied in the following manner:
1. Prior to closing ensure the door seal 42 is in good condition with no cuts or abrasions, check the seal faces 22, 43, 25, 33, 34, seal 42 and groove 23 are clean and free from debris. Lightly coat the seal and mating faces with silicon grease for protection against corrosion. Ensure all locking segments 35 are fully retracted into the door area.
2. Swing the door 3 around to the hub aperture 1, align the door so that the door 3 enters squarely into the hub 1.
3. Using the push-pull clamps 30 attached to each segment, push out each segment 35 in turn into the hub recess 23.
4. Slide the inner locking ring 50 into position.
5. Screw in and tighten the vent/bleeder screw 60 with its metal bonded face seal 82. The screw and seal do not require excessive torque to tighten and form a seal.

The number of locking segments 35 and push/pull clamps 30 can be varied. For example one could use two, three or six segments. The locking ring 50 can be supported by other means instead of ball and groove tracks. The door hinge arms can be varied in shape and size. Spacer blocks may be inserted into the circumferential gaps between the locking segments when the segments are in the locked position, to keep out debris, instead of using seals 54 mounted to the locking ring. Instead of push/pull clamps, other forms of mechanism may be used to move the locking segments in a radial direction between the open and locked positions.

Referring to Figs. 9 to 19 there is shown a second embodiment of a closure according to the invention. Like parts are denoted by the same reference signs as those used in relation to Figs. 1 to 8. The closure uses the same principle, in that locking segment blocks 35 are moved radially to effect a locking of the door 3, but the parts differ from those in the first embodiment.

Arranged on the front face of the door 3 is a retaining flange 103 which rotatably supports a drive plate 101 by means of a bearing ring 104. Fixed to the drive plate 101 is a handle support 112 which holds a slidable handle 110. The handle 110 can be slid out to the position shown in Fig. 9 to provide leverage, but can be slid in when not in use so as not to project beyond the closure. The handle 110 may be detachable, if required.

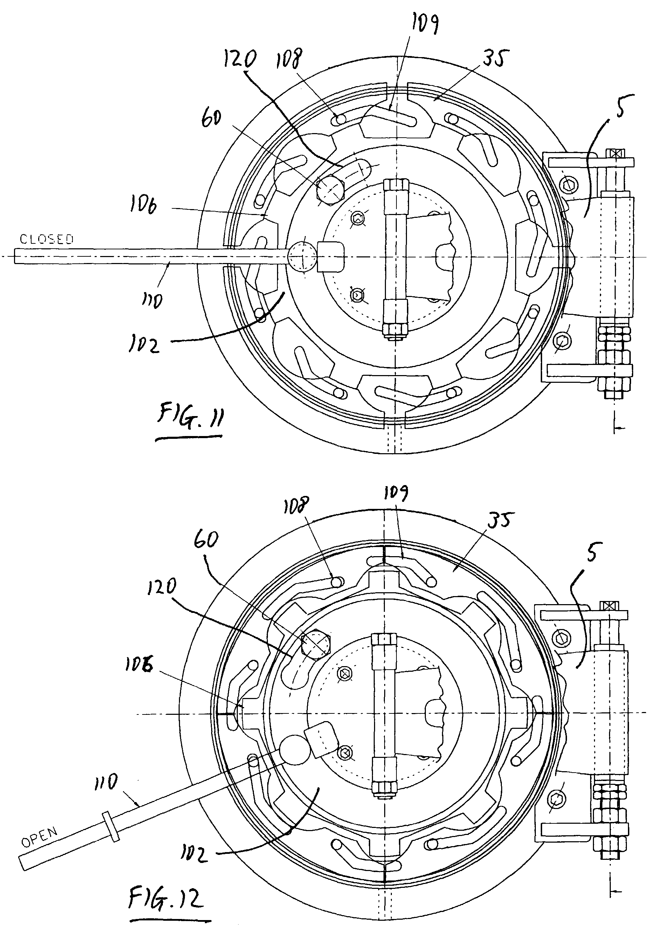

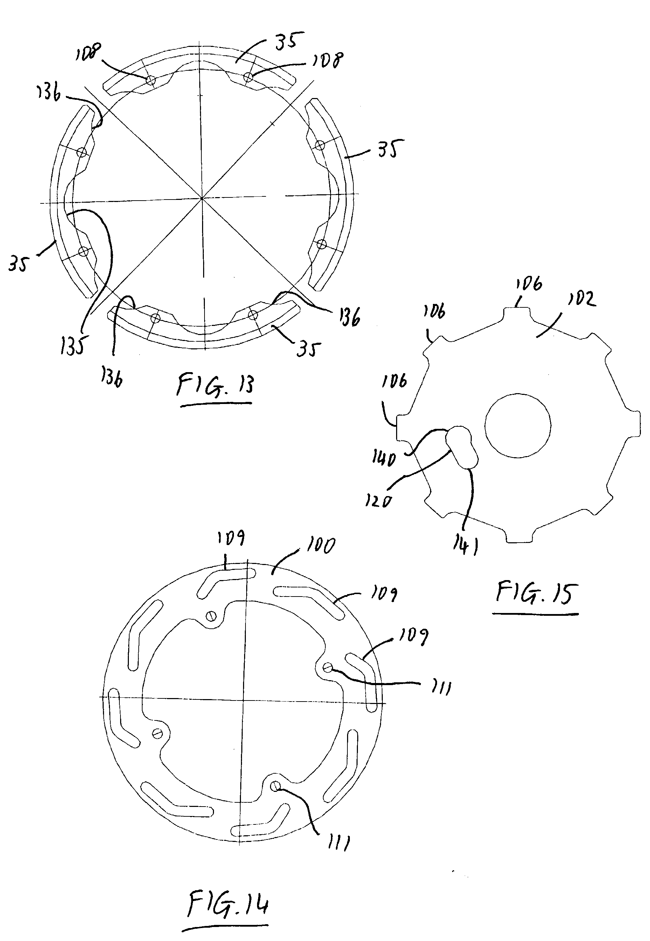

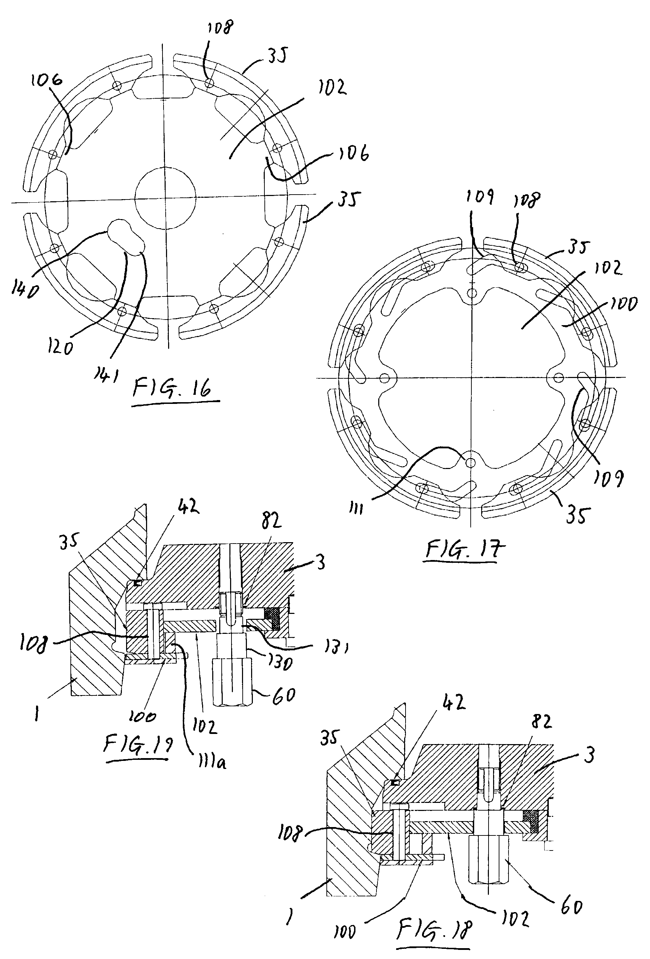

The drive plate 101 comprises two separate plates spaced apart from each other. One plate is the segment guide plate 100 which is provided with guide slots 109 which engage with guide pins 108 provided on the segment blocks 35. The other plate is a lockout plate 102 which is provided with lugs 106 which in the closed position bear on the segment blocks 35 to prevent the blocks 35 from moving radially inwardly. The segment guide plate 100 and the lockout plate 102 are rigidly connected to each other, either by bolts 111 (as shown in Figs. 14 and 17) or by welding connecting legs 111a (as shown in Figs. 10 and 19).

In an alternative embodiment of the invention, particularly where the pipeline closure is for use in pipelines having a small diameter, the guide plate 100 and lockout plate 102 can be integral in the form of a unitary drive plate 101.

Instead of moving the segments 35 between the locked and unlocked positions by operating four separate toggle clamps 30, the segments 35 are moved together by a single movement of the handle 110 from the open position of Fig. 12 to the closed position of Fig. 11. Rotation of the handle 110 causes rotation of the drive plate 101. Rotation of the drive plate causes rotation of the segment guide plate 100. Since the segments 35 cannot rotate, because the guide pins 108 are engaged in radial retaining grooves 108a in the door 3, the guide slots 109 cause the guide pins 108 and the segment blocks 35 to move in a radially outward direction. At the same time the lockout plate 102 rotates, so that the lugs 106 engage with the rear face of the segments 35, causing the segments to be locked out.

Each segment block 35 is thus moved radially outwards to a locking position in which it partially overhangs the outer perimeter 41 of the door. When the door 3 is closed, such that the seal 42 in the rear bearing surface 43 of the door bears against the step portion 22 of the hub 1, the segment block 35 in its locking position locates within the recess 23. As the segment block 35 is moved radially outwards the tapered front surface 34 of the segment block 35 locates against the tapered surface 25 of the hub. The segment block becomes elastically deformed under the wedge action of the corresponding tapered surfaces 25 and 34, and the effect is to push the door 3 tighter against the step portion 22 of the hub 1, as described above with reference to Figs. 1 to 8.

When the lockout plate is in the locked position, as in Figs. 11 and 16, the lugs 106 bear against the blocks 35, so that the segment blocks 35 cannot be displaced radially and the closure is thus locked. Each block 35 is provided with a central recess 135 and lateral recesses 136 on the inner face, as shown in Fig. 13. These ensure that the lugs 106 do not engage the blocks 35 when the closure is in the open position of Fig. 12. Thus the rotational position of the retaining lugs 106 corresponds to the rotational position of the recesses 35, 135 when the segment blocks 35 are in the open position. In this position the lugs extend into the area of the recesses and do not engage the blocks 35.

This embodiment of the closure of the present invention can also incorporate a vent plug 60 which prevents the door 3 being opened while there is a large pressure difference across the closure. The vent plug 60 is permanently connected to the door 3 by a threaded connection. The shaft of the vent plug 60 has a large diameter portion 130 and a small diameter portion 131. When the vent plug is screwed fully in (as shown in Fig. 18) the large diameter portion 130 engages with a large diameter portion 140 of a corresponding slot in the drive plate 101, so that the drive plate cannot be turned. The drive plate 101 and segments 35 are then locked in the closed position.

When the vent plug 60 is unscrewed to the unlocked position (as shown in Fig. 19) the small diameter portion 131 engages with the slot 120, and the drive plate 101 can then be turned through 22.5 degrees, since the vent plug can pass through the small diameter portion 141 of the slot. In other respects the vent plug 60 functions as described above with reference to Figs. 1 to 8.

The closure of the second embodiment offers the same advantages as that of the first embodiment.

The unlocking and opening of the closure door takes place in the following fashion.
1. Ensure that the vessel isolation valve (not shown) has been fully closed.
2. Ensure that the vessel 2 has been fully drained and vented and isolated from any other pressure source.
3. Unscrew the vent screw head 60 until its shoulder is clear of the lockout plate 102. If on loosening a 1/4 turn pressure escapes, retighten and investigate.
4. Pull out the opening mechanism handle 110 and swing downwards. A 20 to 25 degree swing is all that is required. The locking segments 35 are released from the closure hub recess and retracted onto the closure door front.
5. The door 3 can now be swung open.

Locking and closing of the door of the closure of the invention is accompanied in the following manner:
1. Prior to closing ensure the door seal 42 is in good condition with no cuts or abrasions, check the seal faces 22, 43, 25, 33, 34, seal 42 and groove 23 are clean and free from debris. Lightly coat the seal and mating faces with silicon grease for protection against corrosion. Ensure all locking segments 35 are fully retracted into the door area.
2. Swing the door 3 around to the hub aperture 1, align the door so that the door 3 enters squarely into the hub 1.
3. Pull out the opening mechanism handle 110 and swing upwards. A 20 to 25 degree swing is all that is required. The locking segments 35 are driven into the closure hub recess.
4. Screw in and tighten the vent/bleeder screw 60. The screw and seal do not require excessive torque to tighten and form a seal.

These and other modifications and improvements can be incorporated without departing from the scope of the invention.

## Claims

1. A closure comprising a door adapted to fit into an aperture in a member to be closed, a plurality of arcuate locking members disposed around the periphery of the door for locking the door to the said member, the locking members being movable in a radial direction towards and away from the periphery of the door, the closure further comprising a locking plate member adapted to be moved to a locking position radially inward of the arcuate locking members when the arcuate locking members are at the expanded position, and drive means adapted to drive the arcuate locking members in the radial direction and to drive the locking plate member into the locking position.

2. A closure according to Claim 1 wherein the aperture comprises a substantially cylindrical bore having a locking recess.

3. A closure according to Claim 2 wherein the recess has a planar bearing surface adapted to seal against a corresponding bearing surface on the door, and the recess has an angled wedge surface opposed to the bearing surface, the locking members being provided with a corresponding angled surface adapted to engage the angled wedge surface.

4. A closure comprising a door adapted to fit into an aperture in a member to be closed, a plurality of arcuate locking members disposed around the periphery of the door for locking the door to the said member, the locking members being movable in a radial direction towards and away from the periphery of the door, the closure further comprising a drive plate having a plurality of drive slots adapted to engage the arcuate locking members such that rotation of the drive plate causes movement of the locking members in a radial direction between an open position and a locked position.

5. A closure according to Claim 4 wherein the each drive slot has a first arcuate portion whose spacing from the axis of rotation is substantially constant, and a second offset portion whose spacing from the axis of rotation decreases with distance from the first portion.

6. A closure according to Claim 4 or 5 wherein each arcuate locking member has two engaging pins each adapted to engage a drive slot.

7. A closure according to any preceding Claim wherein the closure comprises a locking plate adapted to engage and prevent radial movement of the arcuate members when they are in the locked position.

8. A closure according to Claim 7 wherein the locking plate is integral with the drive plate.

9. A closure according to Claim 7 or 8 wherein the locking plate comprises a plurality of retaining lugs adapted to engage the arcuate locking members in the locked position.

10. A closure according to Claim 9 wherein each arcuate locking member is provided with one or more recesses such that the rotational position of the retaining lugs corresponds to the rotational position of the recesses when the arcuate locking members are in the open position.
